# EUROPEAN PATENT APPLICATION

(11) **EP 3 456 519 A1**
(43) Date of publication of application: **20.03.2019**
(21) Application number: 17211048.8
(22) Date of filing: 29.12.2017
(51) Int. Cl.: B29C 64/393, B29C 64/129

(54) **PHOTOCURING TYPE 3D PRINTER AND PEELING METHOD FOR USING THE SAME**

(30) Priority: 14.09.2017 CN 201710827294
(71) Applicant: XYZprinting, Inc., New Taipei City 22201 (TW); Kinpo Electronics, Inc., New Taipei City 22201 (TW)
(72) Inventor: JAU, Wei-Chun, 22201 Shenkeng Dist., New Taipei City (TW); KUO, Tsung-Hua, 22201 Shenkeng Dist., New Taipei City (TW); DING, Ming-Hsiung, 22201 Shenkeng Dist., New Taipei City (TW)
(74) Representative: 2K Patentanwälte Blasberg Kewitz & Reichel

(57) **Abstract**

A photocuring type 3D printer includes a sink (31) containing forming liquid (30), a membrane (312) disposed on the internal bottom of the sink (31), an emitting unit (33) disposed below the sink (31), a forming platform (32) disposed above the sink (31), and a peeling detector (34). When printing, the 3D printer (3) controls the forming platform (32) to move along a z axis to a printing height of the model (4), and controls the emitting unit (33) to emit lights. After solidifying, the 3D printer (3) controls the forming platform (32) to raise along the z axis for performing a peeling procedure, and the peeling detector (34) to continue detecting the attachment status between the model (4) and the membrane (312). When the peeling detector (34) detects the model (4) peeled from the membrane (312), the 3D printer (3) controls the forming platform (32) to stop raising.

## Description

### BACKGROUND OF THE INVENTION

### Field of the Invention

The technical field relates to 3D printer, in particular relates to a photocuring type 3D printer and peeling method for using the same.

### Description of Prior Art

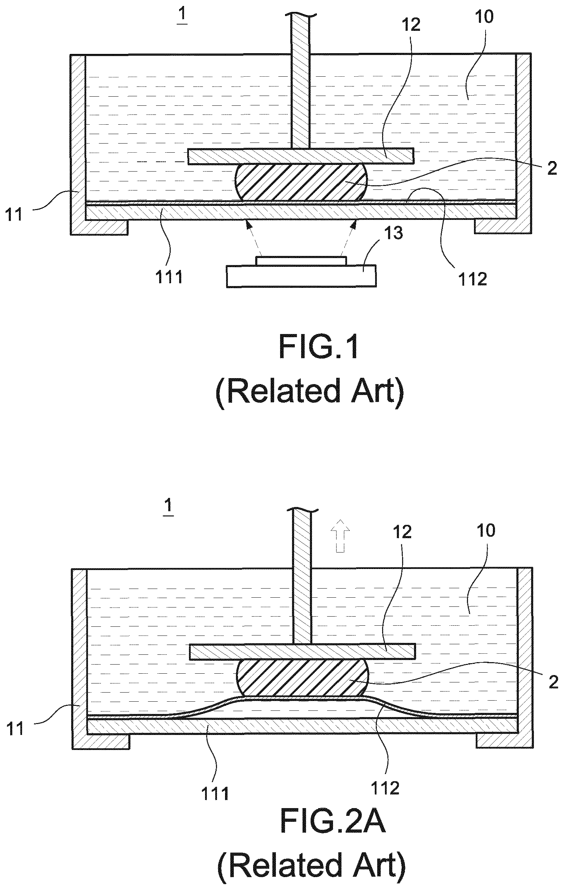

Fig. 1 is a schematic diagram of a photocuring type 3D printer of related art. A under illumination photocuring type 3D printer is disclosed (referred as the 3D printer 1 in the following description). The 3D printer 1 includes a sink 11 for containing a forming liquid 10, a glass layer 111 disposed on the bottom of the sink 11, a membrane 112 disposed above the glass layer 111, a forming platform 12 for creating a model 2 in the forming liquid 10, and an emitting unit 13 disposed below the sink 11 and the glass layer 111.

When printing the model 2, the 3D printer 1 controls the forming platform 12 to move inward the sink 11 to a printing height of a printing layer of the model 2. Next, the 3D printer 1 controls the emitting unit 13 to emit lights towards the sink 11 so as to solidify the forming liquid 10 between the forming platform 12 and the membrane 112 to be a printing layer of the model 2 attaching to the forming platform 12.

Fig. 2A is a schematic diagram of a peeling action by a 3D printer of related art. The printing layer attaches to the forming platform 12 as well as the top surface of the membrane 112 after the printing layer is solidified. Accordingly, the 3D printer 1 controls the forming platform 12 to raise after the printing layer is solidified to peel the whole model 2 from the membrane 112, then controls the forming platform 12 to drop to a printing height of the next printing layer of the model 2 in order to solidify the next printing layer.

Because each different model 2 has own different shape and each contact area between each printing layer and the membrane 112 is different, the required time for each peeling procedure is different. In other words, the raise distance of the forming platform 12 in each peeling procedure varies.

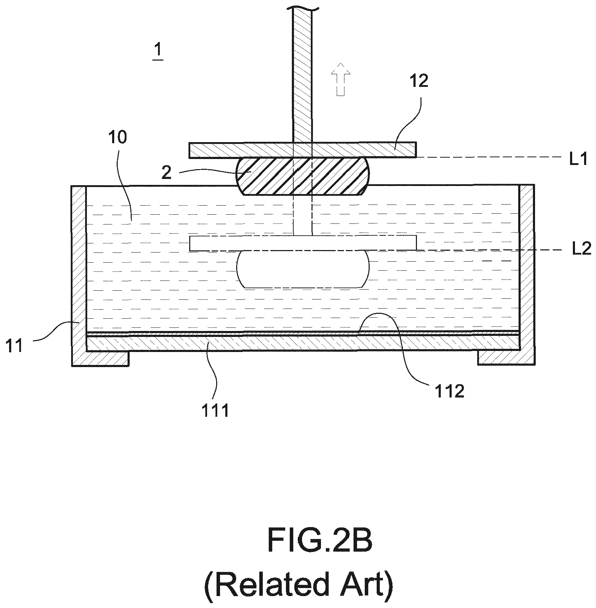

Fig. 2B is a schematic diagram of a raising height applied in the 3D printer of related art. In related arts, the 3D printer 1 has no approaches to detect if the model 2 is peeled off. Therefore, regardless of the shapes and sizes of the current printing layer, the 3D printer 1 considers each peeling procedure is completed when the 3D printer 1 controls the forming platform 12 to raise upward to a fixed predetermined height L1 in each peeling procedure.

Specifically, the above mentioned predetermined height L1 is a height determined by the designers of the 3D printer 1 after testing. As long as the forming platform 12 moves to the predetermined height L1, regardless of the shapes and sizes of the current printing layer, the peeling procedure is considered completed (i.e., the model 2 must be peeled from the membrane 112 completely while the forming platform 12 moves to the predetermined height LI).

However, as shown in Fig. 2B, if the contact area between the printing layer and the membrane 112 is small, it is likely the printing layer is completely peeled off while the forming platform 12 raises to a lower peeling height L2. Under the circumstance, the 3D printer 1 is still required to control the forming platform 12 to raise to the predetermined height L1 to continue the following procedures which makes the printing becomes massively time-consuming.

Based on the inventor's experiments, the solidifying time of the model 2 only occupies 20%-30% of the total printing time and the executing time for the peeling procedure occupies 70% to 80% of the total printing time in the photocuring printing of the related arts. As a result, it is desired in the market to resolve the issue of a time-consuming peeling procedure of the type of 3D printers so as to increase the printing efficiency of the 3D printers.

### SUMMARY OF THE INVENTION

The disclosure is directed to a photocuring type 3D printer and peeling method for using the same which directly detects if a model is completely peeled and immediately controls the forming platform to stop raising and thus decreases the required time for the peeling procedure.

In a disclosed example, a photocuring type 3D printer includes a sink for containing forming liquid, a membrane disposed on the internal bottom of the sink, an emitting unit disposed below the sink, a forming platform disposed above the sink, and a peeling detector.

When printing a model, the 3D printer controls the forming platform to move along a z axis to a printing height, and controls the emitting unit to emit lights for solidifying the model. After the model is solidified, the 3D printer controls the forming platform to raise along the z axis for performing a peeling procedure of the model, and controls the peeling detector to continue to detect the attachment status between the model to and the membrane. The 3D printing controls the forming platform to stop raising when the peeling detector detects that the model is peeled from the membrane.

Compare with the peeling methods used in the related arts, the peeling detector of the disclosed example continues to detect if the model is completely peeled from the membrane during the peeling procedure, and the 3D printer immediately controls the forming platform to stop raising upon detecting the model is completely peeled, thus effectively reduces the require time of the peeling procedure for the 3D printer.

### BRIEF DESCRIPTION OF DRAWING

The features of the present disclosed examples believed to be novel are set forth with particularity in the appended claims. The present disclosed examples, however, may be best understood by reference to the following detailed description of the present disclosed examples, which describes an exemplary embodiment of the present disclosed examples, taken in conjunction with the accompanying drawings, in which:
Fig. 1 is a schematic diagram of a photocuring type 3D printer of related art;
Fig. 2A is a schematic diagram of a peeling action by a 3D printer of related art;
Fig. 2B is a schematic diagram of a raising height applied in the 3D printer of related art;
Fig. 3 is a schematic diagram of a photocuring type 3D printer according to a first disclosed example;
Fig. 4 is a block diagram of a photocuring type 3D printer according to the first disclosed example;
Fig. 5A is a schematic diagram of a first peeling action according to the first disclosed example;
Fig. 5B is a schematic diagram of a second peeling action according to the first disclosed example;
Fig. 6 is a peeling flowchart according to the first disclosed example;
Fig. 7 is a force schematic diagram of a forming platform according to the first disclosed example;
Fig. 8 is a block diagram of a photocuring type 3D printer according to the second disclosed example; and
Fig. 9 is a peeling flowchart according to the first disclosed example.

### DETAILED DESCRIPTION OF THE INVENTION

In cooperation with attached drawings, the technical contents and detailed description of present disclosed examples are described thereinafter according to a preferable embodiment, being not used to limit its executing scope. Any equivalent variation and modification made according to appended claims is all covered by the claims claimed by the present disclosed examples.

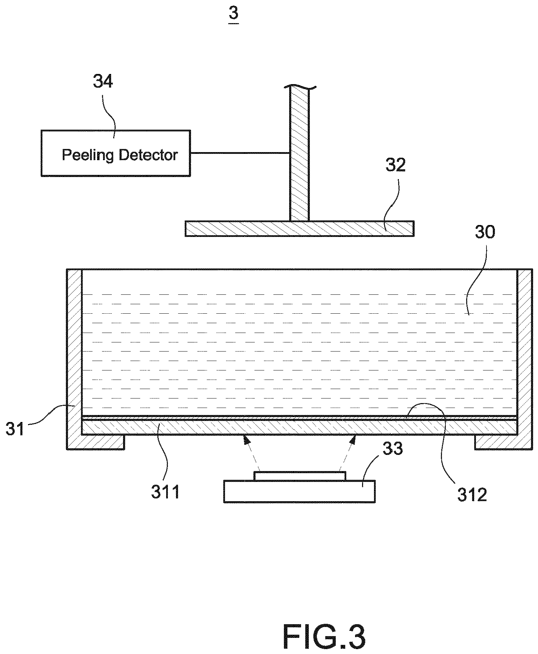

Fig. 3 is a schematic diagram of a photocuring type 3D printer according to a first disclosed example. A photocuring type 3D printer is disclosed and the photocuring type 3D printer of the disclosed example is an under illumination photocuring type 3D printer (referred as 3D printer 3 in the following description).

In the embodiment shown in Fig. 3, 3D printer 3 includes a sink 31, a glass layer 311 disposed on the internal bottom of the sink 31, a membrane 312 disposed above the glass layer 311, a forming platform 32 disposed above the sink 311, and an emitting unit 33 disposed below the sink 31. Among which, the glass layer 311 and the sink 31 can be integrated in one piece (for example the sink 31 is a transparent shell body and the glass layer is the bottom of the transparent shell body) or are disposed individually, but the scope is not limited thereto.

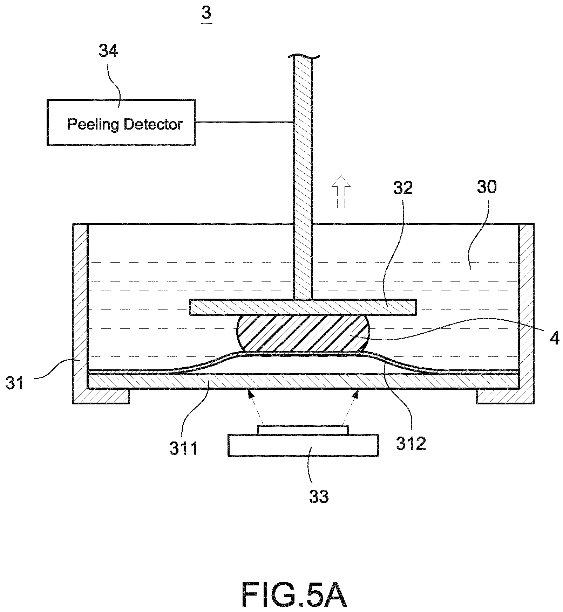

One of the technical features of the disclosed example is that the 3D printer 3 further including a peeling detector 34. The peeling detector 34 is used to continue to detect the attachment status between a model (for example the model 4 shown in Fig. 5A) and a top surface of the membrane 312 when the forming platform 32 performs a peeling procedure.

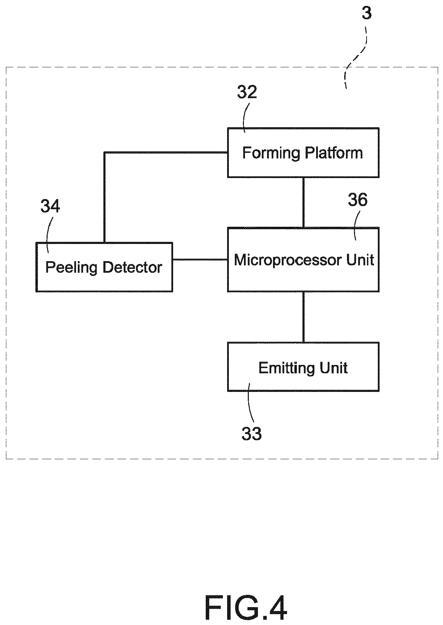

Fig. 4 is a block diagram of a photocuring type 3D printer according to the first disclosed example. The 3D printer 3 also includes a microprocessor unit 36 electrically connected to the above mentioned forming platform 32, the emitting unit 33 and the peeling detector 34, the microprocessor unit 36 is used for controlling actions of the above mentioned forming platform 32, the emitting unit 33 and the peeling detector 34.

Specifically, the microprocessor unit 36 controls the forming platform 32 to stop the peeling procedure and continue to perform the following printing actions when the peeling detector 34 detects the model 4 is completely peeled from the membrane 312 in the 3D printer 3 of the disclosed example (details in the following). Thus, the required time that the 3D printer 3 spends on the peeling procedure is massively reduced and the efficiency of the 3D printer 3 is further improved (i.e., the overall printing time is shortened).

The sink 31 is used for containing forming liquid 30. The forming liquid 30 is photopolymer in an embodiment. When the 3D printer 3 prints a printing layer of a model 4, the microprocessor unit 36 first controls the forming platform 32 to vertically move along the z axis of the 3D printer 3 to immerse in the forming liquid 30 in the sink 31 and locates at a printing height of the printing layer (i.e. to make the distance between the bottom of the forming platform 32 and the top surface of the membrane 312 equals to the mentioned printing height).

When the forming platform 32 locates at the printing height, the microprocessor unit 36 then controls the emitting unit 33 to emit lights towards the inside of the sink 31 (emit lights towards the location of the forming platform 32) so as to solidify the forming liquid 30 between the forming platform 32 and the membrane 312 to be a printing layer of the model 4 attaching the forming platform 32.

In the disclosed example, the 3D printer 3 is a Digital Light Processing (DLP) 3D printer or a photocuring type stereolithography (SLA) 3D printer. The emitting unit 33 is a digital projector screen with a surface light emitting unit or a laser light source with a dot light emitting unit, but the scope is not limited thereto.

In a disclosed example, the membrane 312 is a transparent membrane made by polytetrafluoroethylene, or so called Teflon. The forming liquid 30 is solidified into a solid which attaches to the bottom of the forming platform 32 as well as the top surface of the membrane 312 because of the vacuum phenomenon generated while solidifying. Accordingly, the 3D printer 3 has to perform a peeling procedure for the solidified printing layer after a printing layer of the model 4 is solidified completely and before continue to print (to solidified) the next printing layer.

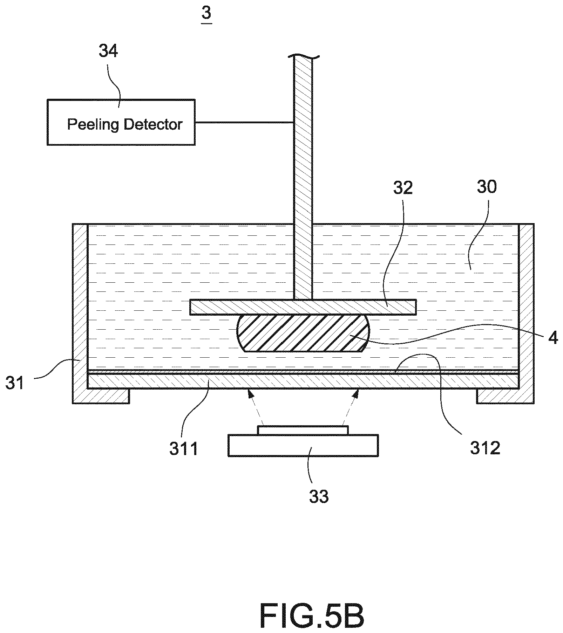

Fig. 5A and Fig.5B are respectively a schematic diagram of a first peeling action and a schematic diagram of a second peeling action according to the first disclosed example.

As shown in Fig. 5A, when the printing layer is solidified completely, the 3D printer 3 controls the forming platform 32 to raise along the z axis via the microprocessor unit 36 to perform the peeling procedure (i.e. to separate the solidified printing layer and the membrane 312 by raising the forming platform 32). Before the printing layer is peeled from the membrane 312, the membrane 312 may generate upward deformation as the forming platform 32 raises.

One of the technical features of the disclosed example is that the microprocessor unit 36 controls the peeling detector 34 to continue to detect the attachment status between the printing layer and the membrane 312 during a raising period of the forming platform 32. In addition, as shown in Fig. 5B, the microprocessor unit 36 immediately controls the forming platform 32 to stop raising when the peeling detector 34 detects that the printing layer is completely peeled from the membrane 312. When the forming platform 32 stops raising, the microprocessor unit 36 then immediately executes the following actions (for example, continues to print the next printing layer of the model 4). Thus, the extra peeling time spent by a 3D printer of related arts in controlling the forming platform 32 to raise anyway to a fixed height (such as the predetermined height L1 shown in Fig. 2B) is greatly saved.

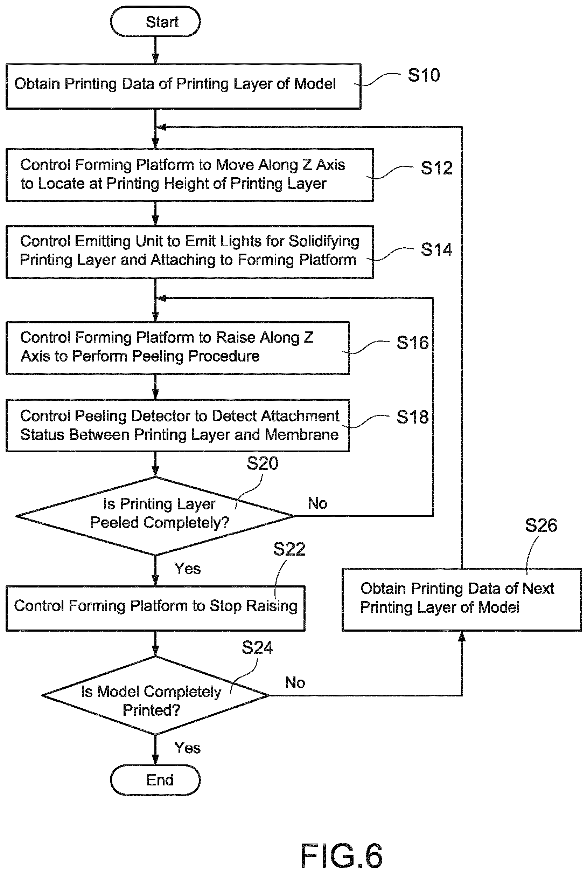

Fig. 6 is a peeling flowchart according to the first disclosed example. A peeling method for a photocuring type 3D printer is also disclosed in the disclosed example (referred as the peeling method), and the peeling method is adopted by a 3D printer 3 as shown in Fig. 3.

When the 3D printer 3 prints a model 4, the microprocessor unit 36 firstly obtains printing data of a printing layer (for example the first printing layer) of the model 4 (step S10). The printing data is mainly the slicing data corresponding to the printing layer to be currently printed by the 3D printer 3. Next, the microprocessor unit 36 of the 3D printer 3 controls the forming platform 32 to move along the z axis (for example to drop) according to the obtained printing data so as to immerse in the forming liquid 30 in the sink 31 and locates at a printing height of the printing layer (step S12).

Specifically, the printing height refers to the distance between the bottom of the forming platform 32 and the top surface of the membrane 312 and the printing height equals to the slicing height of each printing layer of the model 4. The slicing data and the slicing height are known techniques used in 3D printing of related arts which is not repeated hereto.

When the forming platform locates at the printing height, the processor unit 36 controls the emitting unit 36 to emit lights toward the inside of the sink 31 according to the obtained printing data for solidifying the printing layer and attaching to the forming platform 32 (step S14). Specifically, the printing data records the profiles of the printing layer, the microprocessor unit 36 controls the emitting unit 33 to emits lights toward the corresponding location on the bottom of the sink 31 according to the printing data in step S14 so as to make the profile of the solidified printing layer equals to the profile recorded in the printing data.

The microprocessor unit 36 then controls the forming platform 32 to raise along the z axis to perform the above mentioned peeling procedure after the printing layer is solidified completely (step S16). Also, the microprocessor unit 36 controls the peeling detector 34 to continue to detect the attachment status between the printing layer and the membrane 312 during a raising period of the forming platform 32 (step S18) to determine if the printing layer is peeled completely (step S20).

If the detect result by the peeling detector 34 indicates the printing layer is not peeled from the membrane 312 yet, the microprocessor unit 36 controls the forming platform 32 to continue to raise and controls the peeling detector 34 to continue to detect. If the detect result by the peeling detector 34 indicates the printing layer is completely peeled from the membrane 312, the microprocessor unit 36 controls the forming platform 32 to stop raising (step S22).

In other words, the microprocessor unit 36 controls the forming platform 32 to stop raising as long as the peeling detector 34 detects that the printing layer is peeled from the membrane 312 regardless that whether the forming platform 32 is raised to the above mentioned predetermined height L1 in the embodiment. Thus, the required time that the 3D printer 3 spends on the peeling procedure is massively reduced.

After step S20, the printing layer is solidified completely and peeled from the membrane 312, and the forming platform 32 also stops raising. Next, the microprocessor unit 36 determines if the model 4 is completely printed (step S24), i.e. determines if all printing layers of the model 4 are completely printed.

If the model 4 is not completely printed, the microprocessor unit 36 next obtains the printing data of the next printing layer (for example the second printing layer) (step S26), and re-executes step S12 to step S22 to print other printing layers of the model 4 according to the obtained printing data, and peels the printing layers which are printed completely (solidified completely) from the membrane 312 according to the peeling method of the disclosed example.

If the model 4 is printed completely, the microprocessor unit 36 controls the forming platform 32 to raise to an initial location (for example the top of the 3D printer 3) to remove the whole model 4 attached to the forming platform 32 and completes the printing actions of the model 4.

In an embodiment, the peeling detector 34 is connected to the forming platform 32 of the 3D printer 3. The peeling detector 34 continues to detect the force generated as the forming platform 32 raises and transmits the detect result to the microprocessor unit 36 in the step S18 mentioned above. When the peeling detector 34 detects that the force momentarily decreases, the microprocessor unit 36 determines that the printing layer is peeled from membrane 312.

Specifically, when the printing layer is not yet peeled from membrane 312, the tensile force between the printing layer and the membrane 312 forms the drag force and the drag force may obstruct the forming platform 32 from raising up. Therefore, the forming platform 32 needs to output greater force when raising. On the other hand, when the printing layer is peeled from the membrane 312, the drag force no longer exists. Therefore, the force output by the forming platform 32 decreases momentarily to the original force (i.e. the force output when the forming platform 32 raises generally). In a disclosed example, the peeling detector 34 detects if the above mentioned force decreases momentarily whereby the microprocessor unit 36 determining if the printing layer is peeled from the membrane 312.

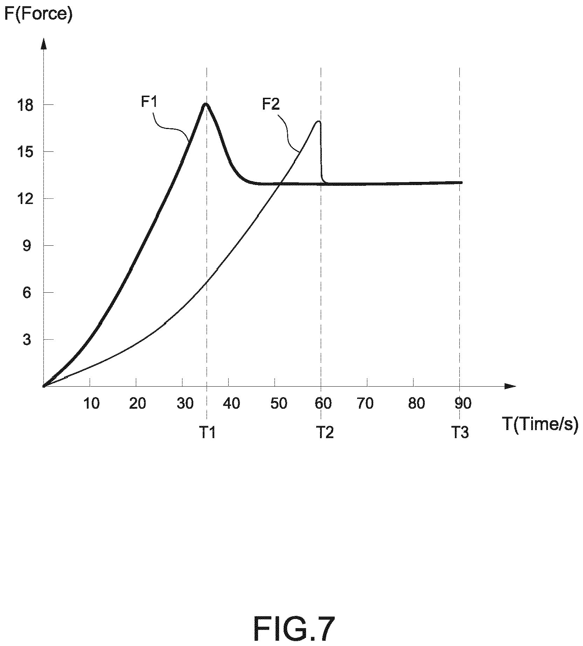

Fig. 7 is a force schematic diagram of a forming platform according to the first disclosed example. If the contact area between the printing layer and the membrane 312 is smaller, the forming platform 32 is required to output a first force F1 greater than the original force when the forming platform 32 raises. When the printing layer is peeled from the membrane 312 at a first peeling time T1, the force output by the forming platform 32 decreases momentarily to the original force.

If the contact area between the printing layer and the membrane 312 is larger, the forming platform 32 is required to output a second force F2 greater than the original force when the forming platform 32 raises. When the printing layer is peeled from the membrane 312 at a second peeling time T2, the force output by the forming platform 32 decreases momentarily to the original force. The second peeling time T2 (for example 60 seconds) is longer than the first peeling time (for example 35 seconds). It is well understood, when the contact area between the printing layer and the membrane 312 is larger, the required peeling time for the 3D printer 3 is longer. On the other hand, when the contact area between the printing layer and the membrane 312 is smaller, the required peeling time for the 3D printer 3 is shorter.

Using the peeling detector 34 of the disclosed example for detecting the moment which the model 4 is peeled in order to control the action of the forming platform 32 is capable of substantially reduces the predetermined peeling time T3 (for example 90 seconds) required for controlling the forming platform 32 to raise to the aforementioned predetermined height L1 when a 3D printer of related arts performs a peeling procedure. Given that a model is basically stacked by at least 1,000 printing layers, the peeling method of the disclosed example saves significant peeling time.

In the above mentioned embodiment, the peeling detector 34 is a force detector configured for detecting the force when the forming platform 32 raises.

In another embodiment, the peeling detector 34 is an optical scale configured for sensing the displacement amount or the moving rate of the forming platform 32.

As mentioned above, when the printing layer is peeled from the membrane 312, the drag force caused by the tensile force between the printing layer and the membrane 312 no longer exists. Therefore, the momentary displacement increases rapidly (i.e. the momentary moving rate increases rapidly) at the moment the printing layer is peeled from the membrane 312. If the peeling detector 34 is an optical scale, the microprocessor unit 36 determines that the printing layer is peeled from the membrane 312 and further controls the forming platform 32 to stop raising when the peeling detector 34 detects the displacement amount of the forming platform 32 or the moving rate increase momentarily.

In another embodiment, the peeling detector 34 can be an image detector, a light sensor or an infrared sensor configured for detecting the changing states of the membrane 312.

Specifically, the membrane 312 is effected by the tensile force of the printing layer and generates upward deformation when the printing layer is still attached to the membrane 312 and the forming platform 32 raises up. At the moment the printing layer is peeled from the membrane 312, the membrane 312 restores by the tension generated (i.e. lying flat on the bottom of the sink 31). In the embodiment, the peeling detector 34 continues to detect if the membrane 312 restores during the raising period of the forming platform 32, and the microprocessor unit 36 determines that the printing layer is peeled from the membrane 312 and further controls the forming platform to stop raising at the moment the peeling detector 34 detects that the membrane 312 starts restoring. Though, the above mentioned embodiments are multiple of the embodiments according to the disclosed example and the scope of the disclosed example is not limited thereto.

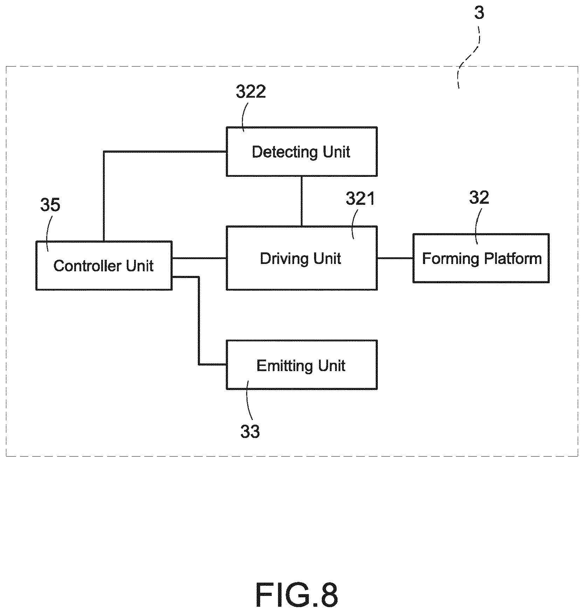

Fig. 8 is a block diagram of a photocuring type 3D printer according to the second disclosed example. In the embodiment shown in Fig. 8, the 3D printer 3 further comprises a driving unit 321 used for controlling the forming platform 32 to move vertically along the z axis, and a controller unit 35 for controlling actions of the driving unit 321 and the emitting unit 33. In the embodiment, the peeling detector 34 is a detecting unit 322 electrically connected to the driving unit 321 and/or the control unit 35.

Specifically, the controller unit 35 in the embodiment is similar to or identical with the microprocessor unit 36 shown in the embodiment of Fig. 4, but is not limited thereto.

In the embodiment, the 3D printer 3 controls the forming platform 32 to raise or drop along the z axis via the force applied by the driving unit 321. The detecting unit 322 is controlled by the control unit 35 to continue to detect a second force output by the driving unit 321 to the forming platform 32 during the raising period of the forming platform 32. In addition, when the detecting unit 322 detects that the second force decreases momentarily, the control unit 35 determines that the printing layer is peeled from the membrane 312 and immediately sends signals to the driving unit 321 so the driving unit 321 controls the forming platform 32 to stop raising.

Specifically, the driving unit 321 is a motor for controlling the forming platform 32 to raise or drop.

In an embodiment, the detecting unit 322 is a current detecting unit electrically connected to the motor (for example directly connects in series to the electric wire of the motor). In the embodiment, control unit 35 is configured for controlling the detecting unit 322 to continue to detect the output current of the motor when the forming platform 32 raises.

As mentioned above, when the printing layer is peeled from the membrane 312, the drag force caused by the tensile force between the printing layer and the membrane 312 no longer exists. Therefore, the second force output from the motor decreases rapidly (i.e. the momentary output current of the motor decreases rapidly) at the moment the printing layer is peeled from the membrane 312. Accordingly, when the detecting unit 322 detects that the output current of the motor momentarily decreases during the raising period of the forming platform 32, the controls unit 35 determines that the printing layer is peeled from membrane 312.

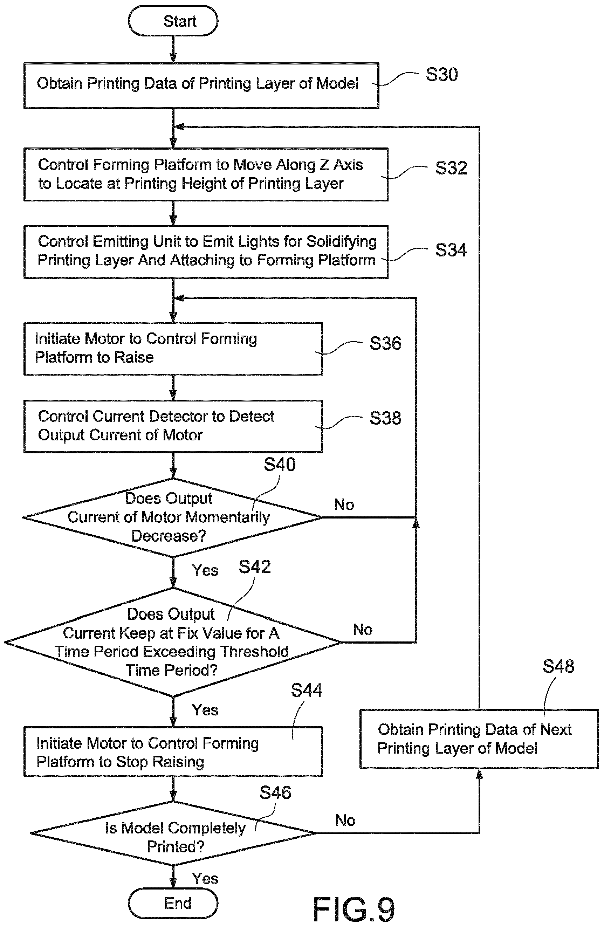

Fig. 9 is a peeling flowchart according to the first disclosed example. A peeling method is disclosed in the embodiment in Fig. 9 which is similar to the peeling method disclosed in the embodiment in Fig. 6 and the peeling method is adopted by a 3D printer 3 as shown in Fig. 8.

Specifically, when the 3D printer 3 prints a model 4, the control unit 35 firstly obtains printing data of a printing layer (step S30). Next, the control unit 35 controls the forming platform 32 to move along the z axis according to the obtained printing data to locate at a printing height of the printing layer (step S32). Next, the control unit 35 controls the emitting unit 33 to emit lights toward the inside of the sink 31 according to the obtained printing data for solidifying the printing layer and attaching to the forming platform 32 (step S34).

The control unit 35 then initiates the motor to control the forming platform 32 to raise the forming platform 32 along the z axis after the printing layer is solidified completely (step S36). In addition, the controls unit 35 controls the current detector (i.e. the detecting unit 322) to continue to detect the output current of the motor (step S38), and determines if the output current of the motor momentarily decreases during the raising period of the forming platform 32 (Step S40).

If the current detector does not detect that the output current of the motor momentarily decreases, the control unit 35 assumes that the printing layer is not peeled from the membrane 312 yet and initiates the motor to continue to control the forming platform 32 to raise. If the current detector detects that the output current of the motor momentarily decreases, the control unit 35 further determines if the output current keeps at a fix value for a time period that exceeds a threshold time period after the output current decreases (step S42).

Specifically, there may be several contact areas between the printing layer and the membrane 312. When any contact area is peeled off during the raising period of the forming platform 32, the output current of the motor may momentarily decrease because the drag force of the peeled area no longer exist, but that the printing layer possibly is not completely peeled from the membrane 312 yet (i.e. the output force of the forming platform 32 still is larger than the original force). As shown in Fig. 7, when the printing layer is completely peeled from the membrane 312, the force output by the forming platform 32 restores and keeps as the original force, which means the output current of the motor will be kept as a fixed value and does not raise again.

In the embodiment, if the current detector detects that the output current of the motor momentarily decreases, but the output current is not kept as the fixed value or the kept time period does not exceed the threshold time period, the control unit 35 determines that the printing layer is not completely peeled from the membrane 312 yet and the method moves back to step S36 for controlling the forming platform 32 to continue to raise.

When the detecting unit detects that the output current of the motor decreases momentarily, and the output current is kept as the fixed value for a time period that exceeds the threshold time, the control unit 35 determines that the printing layer is completely peeled from the membrane 312 and sends signals to the motor for the motor to control the forming platform 32 to stop raising (step S44).

When the forming platform 32 stops raising, the controls unit 35 next determines if the model 4 is completely printed (step S46). If the model 4 is not completely printed, the control unit 35 then obtains the printing data of the next printing layer (step S48), and re-executes step S32 to step S44 to print other printing layers of the model 4 according to the obtained printing data. In addition, the peeling method is completed upon the model 4 is completely printed.

It should be noted that the detecting unit 322 also can be a magnetic induction coil disposed around an electric wire of the motor (not shown in the diagrams). Specifically, the magnetic induction coil is configured for detecting the magnetic force around the electric wire generated by the output current of the motor when controlling the forming platform 32 to raise.

In the embodiment, the controls unit 35 controls the magnetic induction coil to continue to detect the magnetic force around the electric wire during the raising period of the forming platform 32. In addition, when the magnetic induction coil detects that the magnetic force momentarily decreases (i.e. the output current of the motor momentarily decreases), the microprocessor unit 35 determines that the printing layer is peeled from membrane 312.

In another embodiment, the controls unit 35 also determines that the printing layer is completely peeled from the membrane 312 when the magnetic induction coil detects that the magnetic force momentarily decreases, and the magnetic force is kept as a fixed value for a time period that exceeds a threshold time period. Similarly, if the 3D printer 3 detects the force of the forming platform 32 or the driving unit 321 via the detecting unit 322, the control unit 35 may determine that the printing layer is completely peeled from the membrane 312 when the detecting unit 32 detects that the force momentarily decreases and is kept as a fixed value for a time period that exceeds a threshold time period.

With each disclosed example, the 3D printer 3 directly detects if the peeling procedure is completed via the peeling detector 34 (i.e. the detecting unit 322), and immediately controls the forming platform 32 to stop raising when the peeling procedure is completed. Thus, the peeling time required by the 3D printer 3 is effective reduced and the efficiency of the 3D printer 3 is further improved.

## Claims

1. Aphotocuring type 3D printer, comprising:
a sink (31) for containing forming liquid (30);
a membrane (312) disposed on an internal bottom of the sink (31);
a forming platform (32) disposed above the sink (31), configured to move along a z axis of the photocuring type 3D printer to a printing height of a printing layer of a model (4) when the photocuring type 3D printer (3) prints the printing layer;
an emitting unit (33) disposed below the sink (31), configured to emit lights toward the inside of the sink (31) for solidifying the printing layer when the forming platform (32) moves to a printing height;
a peeling detector (34) disposed on the photocuring type 3D printer (3); and
a microprocessor unit (36) electrically connected to the forming platform (32), the emitting unit (33) and the peeling detector (34), configured to control the forming platform (32) to raise along the z axis after the printing layer is solidified, and configured to control the peeling detector (34) to detect an attachment status between the solidified printing layer and the membrane (312) during a raising period of the forming platform (32), and configured to control the forming platform (32) to stop raising when the peeling detector (34) detects that the printing layer is peeled from the membrane (312).

2. The photocuring type 3D printer of claim 1, wherein the peeling detector (34) is connected to the forming platform (32) and configured for detecting a force generated when the forming platform (32) raises, and the microprocessor unit (36) is configured to determine that the printing layer is peeled from the membrane (312) when the force is detected decreasing momentarily during the raising period.

3. The photocuring type 3D printer of claim 2, further comprising a driving unit (321) configured for driving the forming platform (32) to vertically move along the z axis, wherein the peeling detector (34) is a detecting unit (322) electrically connected to the driving unit (321).

4. The photocuring type 3D printer of claim 3, wherein the peeling detector (322) is configured to detect a second force generated when the driving unit (321) controls the forming platform (32) to raise, and the microprocessor unit (36) is configured to determine that the printing layer is peeled from the membrane (312) when the second force is detected decreasing momentarily during the raising period.

5. The photocuring type 3D printer of claim 4, wherein the driving unit (321) is a motor.

6. The photocuring type 3D printer of claim 5, wherein the detecting unit (322) is a current detecting unit electrically connected to the motor, the current detecting unit is configured to detect an output current generated when the motor controls the forming platform (32) to raise, and the microprocessor unit (36) is configured to determine that the printing layer is peeled from the membrane (312) when the output current is detected decreasing momentarily during the raising period.

7. The photocuring type 3D printer of claim 5, wherein the detecting unit (322) is a magnetic induction coil disposed around an electric wire of the motor, and the magnetic induction coil is configured to detect a magnetic force generated around the electric wire when the motor controls the forming platform (32) to raise, the microprocessor unit (36) is configured to determine that the printing layer is peeled from the membrane (312) when the magnetic force is detected decreasing momentarily during the raising period.

8. A photocuring type 3D printer peeling method adopted by a photocuring type 3D printer (3), the photocuring type 3D printer (3) comprising a sink (31) for containing forming liquid (30), a membrane (312) disposed on in internal bottom of the sink (31), a forming platform (32) disposed above the sink (31), an emitting unit (33) disposed below the sink (31), and **characterized in that** the photocuring type 3D printer (3) further comprises a peeling detector (34) and a microprocessor unit (36) electrically connected to the forming platform (32), the emitting unit (33) and the peeling detector (34), and the peeling method comprising:
a) obtaining printing data corresponding to a printing layer of a model (4);
b) the microprocessor unit (36) controlling the forming platform (32) to move along a z axis of the photocuring type 3D printer (3) to a printing height of the printing layer according to the printing data;
c) the processor unit (36) controlling the emitting unit (36) to emit lights toward the inside of the sink (31) according to the printing data for solidifying the printing layer and attaching to the forming platform (32);
d) the microprocessor unit (36) controlling the forming platform (32) to raise along the z axis after the step c;
e) the microprocessor unit (36) controlling the peeling detector (34) to continue to detect an attachment status between the printing layer and the membrane (312) during a raising period of the forming platform (32);
f) repeating executing the step d) and the step e) before the peeling detector (34) detects that the printing layer is peeled from the membrane (312); and
g) the microprocessor unit (36) controlling the forming platform (32) to stop raising after the peeling detector (34) detects that the printing layer is peeled from the membrane (312).

9. The peeling method of claim 8, further comprising following steps:
h) determining if the model (4) is completely printed after the step g); and
i) obtaining printing data corresponding to next printing layer before the model (4) is not completely printed and re-executing the step b) to the step g).

10. The peeling method of claim 8, wherein the step e) is controlling the peeling detector (34) to detect a force generated when the forming platform (32) raises, and determining that the printing layer is peeled from the membrane (312) when the force is detected decreasing momentarily during the raising period.

11. The peeling method of claim 10, wherein the photocuring type 3D printer further comprises a driving unit (321) for driving the forming platform (32) to vertically move along the z axis, and the peeling detector (34) is a detecting unit (322) electrically connected to the driving unit (321), wherein the step e) is controlling the detecting unit (322) to detect a second force generated when the driving unit (321) controls the forming platform (32) to raise, and determining that the printing layer is peeled from the membrane (312) when the second force is detected decreasing momentarily during the raising period.

12. The peeling method of claim 11, wherein the driving unit (321) is a motor, the detecting unit (322) is a current detecting unit electrically connected to the motor, wherein the step e) is controlling the current detecting unit to detect an output current generated when the motor controls the forming platform (32) to raise, and determining that the printing layer is peeled from the membrane (312) when the output current is detected decreasing momentarily during the raising period.

13. The peeling method of claim 12, further comprising following steps after the step e):
j) determining if the output current keeps at a fix value for a time period that exceeding a threshold time period after the current detecting unit detects the output current decreasing momentarily;
k) executing the step f) when the output current does not keep at the fix value for the time period; and
1) executing the step g) when the output current keeps at the fix value for the time period.

14. The peeling method of claim 11, wherein the driving unit (321) is a motor, the detecting unit (322) is a magnetic induction coil disposed around an electric wire of the motor, wherein the step e) is controlling the magnetic induction coil to detect a magnetic force generated around the electric wire when the motor controls the forming platform (32) to raise, and determining that the printing layer is peeled from the membrane (312) when the magnetic force is detected decreasing momentarily during the raising period.
